(19) **Europäisches Patentamt European Patent Office Office européen des brevets**

(11) **EP 4 779 740 A1**

(12) **EUROPEAN PATENT APPLICATION**
published in accordance with Art. 153(4) EPC

(43) Date of publication:
**22.07.2026 Bulletin 2026/30**

(21) Application number: **24895299.6**

(22) Date of filing: **25.01.2024**

(51) International Patent Classification (IPC):
$H01M\ 10/0566^{(2010.01)}$    $H01M\ 10/0568^{(2010.01)}$
$H01M\ 10/0567^{(2010.01)}$    $H01M\ 10/0569^{(2010.01)}$

(52) Cooperative Patent Classification (CPC):
**Y02E 60/10**

(86) International application number:
**PCT/CN2024/073994**

(87) International publication number:
**WO 2025/112185 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.11.2023 CN 202311609848**

(71) Applicant: **Sunwoda Mobility Energy Technology Co., Ltd.**
**Shenzhen, Guangdong 518107 (CN)**

(72) Inventor: **XU, Can**
**Shenzhen, Guangdong 518107 (CN)**

(74) Representative: **Metida**
**Gyneju str. 16**
**01109 Vilnius (LT)**

(54) **SECONDARY BATTERY AND ELECTRICAL APPARATUS**

(57) The present disclosure discloses a secondary battery and an electrical device, and belongs to the field of battery technology. Based on the selection of a specific electrolyte, the secondary battery of the present disclosure establishes a correlation among the concentration of LiFSI in the electrolyte, the donor number of the electrolyte, and the compaction density of the negative electrode plate. When these parameters satisfy a specific range, the electrolyte of the secondary battery can minimize the desolvation energy of lithium ions while ensuring the dissociation of lithium salts. Furthermore, the electrolyte of the secondary battery can form a stable interfacial layer on the positive and negative electrodes, enhance the efficiency of lithium intercalation and deintercalation at the negative electrode, and exhibit an excellent kinetic performance, thereby achieving a rapid charge-discharge performance across a wide temperature range.

EP 4 779 740 A1

## Description

### TECHNICAL FIELD

The present disclosure relates to the field of battery technology, specifically to a secondary battery and an electrical device.

### BACKGROUND

For secondary batteries, such as lithium-ion batteries, fast-charging performance has long been a key focus requiring urgent improvement, but this property is influenced by numerous factors. An electrolyte serves as a key component of a secondary battery. Improper electrolyte selection can not only result in poor wettability of a positive electrode and/or a negative electrode (particularly the negative electrode), but also fail to maintain low desolvation energy of lithium ions in the electrolyte. Consequently, this will lead to reduced kinetic performance of the secondary battery, as well as lithium plating and poor direct current resistance (DCR) performance, ultimately failing to achieve sustained fast-charging performance.

### SUMMARY OF THE DISCLOSURE

To overcome shortcomings of prior art, the present disclosure provides a secondary battery and an electrical device. The secondary battery of the present disclosure is based on a selection of an electrolyte with specific properties, while simultaneously regulating a compaction density of a negative electrode in the secondary battery to a specific parameter-related range. Thus the secondary battery not only exhibits a good DCR performance, but also avoids significant lithium plating during the charge and discharge process, thereby achieving a rapid charge-discharge performance across a wide temperature range.

To achieve the above objective, in a first aspect of the present disclosure, a secondary battery is provided, including a positive electrode plate, a negative electrode plate, a separator, and an electrolyte, where the electrolyte includes a lithium salt and a solvent, the lithium salt includes lithium bis(fluorosulfonyl)imide (LiFSI), and the secondary battery satisfies a relationship as follows:

$$2.0 \leq \frac{100 \times \sqrt{C_0}}{DN \times PD} \leq 12.9,$$

where $C_0$, in mol/L (M), represents a concentration of the LiFSI in the electrolyte;
DN, in kcal/mol, represents a donor number of the electrolyte; and
PD, in g/cm$^3$, represents a compaction density of the negative electrode plate.

In some embodiments, the $C_0$, in mol/L (M), satisfies a relationship of 0 M < $C_0$ (M) < 2 M.
In some embodiments, the DN, in kcal/mol, satisfies a relationship of 0 kcal/mol < DN (kcal/mol) < 15 kcal/mol.
In some embodiments, the PD, in g/cm$^3$, satisfies a relationship of 1 g/cm$^3$ < PD (g/cm$^3$) < 2 g/cm$^3$.
In some embodiments, the $C_0$, in M, satisfies a relationship of 0.1 M ≤ $C_0$ (M) ≤ 1 M.
In some embodiments, the DN, in kcal/mol, satisfies a relationship of 5 kcal/mol ≤ DN (kcal/mol) ≤ 10 kcal/mol.
In some embodiments, the PD, in g/cm$^3$, satisfies a relationship of 1.1 g/cm$^3$ ≤ PD (g/cm$^3$) ≤ 1.8 g/cm$^3$.
In some embodiments, the lithium salt further includes at least one selected from the group consisting of lithium hexafluorophosphate (LiPF$_6$), lithium tetrafluoroborate (LiBF$_4$), lithium bis(oxalato)borate (LiBOB), lithium difluoro(oxalato)borate (LiDFOB or LiODFB), lithium difluoro(bisoxalato)phosphate (LiDFBP, or LiDFBOP), and lithium bis(trifluoromethanesulfonyl)imide (LiTFSI).
In some embodiments, the electrolyte further includes an additive, and the additive includes a silicon-containing additive and a sulfur-containing additive.
In some embodiments, the silicon-containing additive includes at least one selected from the group consisting of tris(trimethylsilyl)phosphite, tris(trimethylsilyl)phosphate, tris(trimethylsilyl)borate, trimethylfluorosilane, and heptamethyldisilazane.
In some embodiments, the sulfur-containing additive includes at least one selected from the group consisting of 1,3-propanesultone and ethylene sulfate (DTD).
In some embodiments, the additive further includes at least one selected from the group consisting of vinylene carbonate (VC), vinyl ethylene carbonate (VEC), fluoroethylene carbonate (FEC), and difluoroethylene carbonate (DFEC).

In some embodiments, the sulfur-containing additive includes the 1,3-propanesultone and the ethylene sulfate, and a mass ratio of the 1,3-propanesultone to the ethylene sulfate is in a range of from 7:3 to 5:5.

In some embodiments, the additive includes lithium difluorophosphate (LiPO$_2$F$_2$ or LiDFP).

In some embodiments, a weight percentage of the additive in the electrolyte is 0.5 wt% to 10 wt%.

In some embodiments, the solvent includes at least one selected from the group consisting of ethylene carbonate (EC), propylene carbonate (PC), butylene carbonate (BC), bis(2,2,2-trifluoroethyl) carbonate, dimethyl carbonate (DMC), ethyl methyl carbonate (EMC), diethyl carbonate (DEC), methyl propyl carbonate (MPC), diphenyl carbonate (DPC), ethyl acetate (EA), propyl acetate (PA), methyl propionate (MP), ethyl propionate (EP), propyl propionate (PP), methyl butyrate (MB), ethyl butyrate (EB), ethyl 2,2-difluoroacetate (EDFA), methyl 2,2-difluoroacetate (MDFA), methyl 2,3,3,3-tetrafluoropropionate, γ-butyrolactone, acetonitrile (ACN), and sulfolane.

In some embodiments, an active material in the negative electrode plate includes at least one selected from the group consisting of graphite, a silicon-based material, and lithium metal.

In some embodiments, an active material in the positive electrode plate includes at least one selected from the group consisting of LiCoO$_2$, LiFePO$_4$, and Li$_a$Ni$_x$Co$_y$Mn$_{(1-x-y)}$O$_2$, where $0.9 \leq a \leq 1.1$, $0 < x < 1$, $0 < y < 1$, and $x + y < 1$.

In a second aspect of the present disclosure, the present disclosure provides an electrical device including the aforementioned secondary battery, where the secondary battery serves as a power supply for the electrical device.

The beneficial effects of the present disclosure are as follows:

The present disclosure provides a secondary battery and an electrical device. Based on the selection of a specific electrolyte, the secondary battery establishes a correlation among the concentration of LiFSI in the electrolyte, the donor number of the electrolyte, and the compaction density of the negative electrode plate. When these parameters satisfy a specific range, the electrolyte of the secondary battery can minimize the desolvation energy of lithium ions while ensuring the dissociation of lithium salts. Furthermore, the electrolyte of the secondary battery can form a stable interfacial layer on the positive and negative electrodes, enhance the efficiency of lithium intercalation and deintercalation at the negative electrode, and exhibit an excellent kinetic performance, thereby achieving a rapid charge-discharge performance across a wide temperature range.

## DETAILED DESCRIPTION

To make the objective, technical solutions, and advantages of the embodiments of the present disclosure clearer, the technical solutions in the embodiments of the present disclosure will be clearly and completely described below. Obviously, the described embodiments are some rather than all of the embodiments of the present disclosure. All other embodiments obtained by those of ordinary skill in the art based on the embodiments of the present disclosure without creative efforts should fall within the protection scope of the present disclosure.

In the present disclosure, an open-ended technical feature includes a close-ended technical solution composed of the listed feature, and also includes an open-ended technical solution including the listed feature.

In the present disclosure, unless otherwise specified, any numerical range is considered continuous, and includes minimum and maximum values of the numerical range and any value between the minimum and maximum values. Further, when the numerical range refers to integers, any integer between the minimum and maximum values of the numerical range is included. Additionally, when a plurality of ranges are provided to describe a feature or characteristic, the plurality of ranges can be combined. In other words, unless otherwise indicated, all ranges disclosed herein shall be understood to encompass any and all sub-ranges belonging to the ranges.

In the present disclosure, there is no special limitation on detailed dispersion and stirring methods.

Unless otherwise specified, all reagents or instruments used in the present disclosure are conventional products that can be obtained commercially.

In an embodiment of the present disclosure, provided is a secondary battery, including a positive electrode plate, a negative electrode plate, a separator, and an electrolyte, where the electrolyte includes a lithium salt and a solvent, the lithium salt includes lithium bis(fluorosulfonyl)imide (LiFSI), and the secondary battery satisfies a relationship as follows:

$$2.0 \leq \frac{100 \times \sqrt{C_0}}{DN \times PD} \leq 12.9,$$

where $C_0$, in mol/L (M), represents a concentration of the LiFSI in the electrolyte;

DN, in kcal/mol, represents a donor number of the electrolyte;

PD, in g/cm$^3$, represents a compaction density of the negative electrode plate.

Most electrolytes with a high salt dissociation capability use solvents that impart a relatively high DN value to the electrolytes as a whole. Meanwhile, LiFSI exhibits a weak lithium-ion binding energy, which effectively reduces the impedance and improves the fast charging capability of a secondary battery. Furthermore, the LiFSI exhibits a high thermal stability, thereby enhancing the storage stability of the electrolyte. However, an excessively high concentration of the LiFSI can corrode an aluminum current collector, thereby adversely affecting the performance of the secondary battery. Furthermore, the usage of electrolytes should be associated with the negative electrode plate, as during the rapid charge/discharge process, the distribution of active materials and the electrolyte wetting conditions in the negative electrode plate directly influence the energy density and lithium intercalation/deintercalation kinetics of the whole secondary battery. In the technical solution of the present disclosure, by comprehensively designing the LiFSI concentration in the electrolyte, the DN value of the the electrolyte, and the compaction density of the negative electrode plate, insufficient dissociation of lithium salts in the electrolyte can be effectively avoided, the energy required for lithium-ion desolvation can be minimized, the interfacial impedance of the overall electrolyte can be reduced, an ideal and stable interfacial layer can be formed on surfaces of the positive and negative electrode plates, and the rapid lithium-ion intercalation/deintercalation on the negative electrode plate can be enhanced, thereby ultimately achieving ideal fast-charge and fast-discharge performance.

In some embodiments, the $C_0$, in M, satisfies a relationship of $0 \text{ M} < C_0 \text{ (M)} < 2 \text{ M}$, more preferably, the $C_0$, in M, satisfies a relationship of $0.1 \text{ M} \le C_0 \text{ (M)} \le 1 \text{ M}$.

When the concentration of the LiFSI in the electrolyte falls within the above range, the electrolyte in the secondary battery can ensure sufficient lithium-ion solvent binding energy, thereby exhibiting an excellent kinetic performance.

In some embodiments, $C_0$ may be any one selected from the group consisting of 0.1, 0.2, 0.3, 0.5, 0.8, and 1, or a range defined by any two of the aforementioned values.

In some embodiments, the $C_0$ can be measured by gas chromatography-mass spectrometry (GC-MS). A testing method of a DN value is nuclear magnetic resonance (NMR). Typically, a donor number (DN) of an electrolyte is measured using NMR. Specifically, $^{23}$Na NMR spectra of several known solvents (for example, commonly used solvents including but not limited to acetic anhydride, acetonitrile, dimethoxyethane (DME), dimethyl sulfoxide (DMSO), pyridine, and 1-methylimidazole) are tested to construct standard calibration curves. Subsequently, a $^{23}$Na NMR spectrum of 10 mM sodium bis(trifluoromethanesulfonyl)imide (NaTFSI) in the electrolyte is measured, and the DN value of the electrolyte is determined by comparing its chemical shift with the standard calibration curve. The compaction density (PD) of the negative electrode plate can be measured using a powder resistivity and compaction density tester, PRCD1100.

In some embodiments, $0 \text{ kcal/mol} < \text{DN (kcal/mol)} < 15 \text{ kcal/mol}$; more preferably, $5 \text{ kcal/mol} \le \text{DN (kcal/mol)} \le 10 \text{ kcal/mol}$.

When the DN value falls within the above range, the electrolyte in the secondary battery can prevent insufficient dissociation or even plating of the lithium salt, thereby optimizing the overall electrochemical performance of the secondary battery.

In some embodiments, the DN, in kcal/mol, may be any one selected from the group consisting of 5 kcal/mol, 6 kcal/mol, 7 kcal/mol, 8 kcal/mol, 9 kcal/mol, and 10 kcal/mol, or a range defined by any two of the aforementioned values.

In some embodiments, $1 \text{ g/cm}^3 < \text{PD (g/cm}^3) < 2 \text{ g/cm}^3$, and more preferably, $1.1 \text{ g/cm}^3 \le \text{PD (g/cm}^3) \le 1.8 \text{ g/cm}^3$.

If the compaction density of the negative electrode plate is too low, the energy density of the secondary battery may be affected. However, if the compaction density of the negative electrode plate is too high, the electrolyte may not be able to fully wet the active material, ultimately reducing the kinetic performance of the secondary battery. Therefore, when the compaction density of the negative electrode plate falls within the preferred range, the overall performance of the second battery is optimal.

In some embodiments, the PD, in $\text{g/cm}^3$, may be any one selected from the group consisting of 1.1 $\text{g/cm}^3$, 1.2 $\text{g/cm}^3$, 1.3 $\text{g/cm}^3$, 1.4 $\text{g/cm}^3$, 1.5 $\text{g/cm}^3$, 1.6 $\text{g/cm}^3$, 1.7 $\text{g/cm}^3$, and 1.8 $\text{g/cm}^3$, or a range defined by any two of the aforementioned values.

In some embodiments, the lithium salt further includes at least one selected from the group consisting of lithium hexafluorophosphate, lithium tetrafluoroborate, lithium bis(oxalato)borate, lithium difluoro(oxalato)borate, lithium difluoro(bisoxalato)phosphate, and lithium bis(trifluoromethanesulfonyl)imide.

In some embodiments, a concentration of the lithium salt in the electrolyte is 0.9 M to 1.5 M. It can be understood that, when the electrolyte includes several different lithium salts, the concentration of the lithium salt refers to a total concentration of lithium contributed by all lithium salts in the electrolyte, i.e., a total concentration of lithium from LiFSI and other lithium salts (at least one selected from the group consisting of lithium hexafluorophosphate, lithium tetrafluoroborate, lithium bis(oxalato)borate, lithium difluoro(oxalato)borate, lithium difluoro(bisoxalato)phosphate, and lithium bis(trifluoromethanesulfonyl)imide).

In some embodiments, the concentration of the lithium salt in the electrolyte may be any one selected from the group consisting of 0.9 M, 1 M, 1.1 M, 1.2 M, 1.3 M, 1.4 M, and 1.5 M, or a range defined by any two of the aforementioned values.

If a content of the lithium salt in the electrolyte is too high, the overall viscosity of the electrolyte will be increased, which is unfavorable for the wetting of the negative electrode plate. However, when the content of the lithium salt is too low, the conductivity of the electrolyte will be reduced. Therefore, when the lithium salt with a content falling within the aforementioned moderate range is introduced into the electrolyte, the secondary battery can exhibit more excellent performance.

In some embodiments, the electrolyte also includes an additive.

In some embodiments, a weight percentage of the additive in the electrolyte is 0.5 wt% to 10 wt%. It can be understood that when the electrolyte includes several different additives, the weight percentage of the additive in the electrolyte refers to a total weight percentage of all additives in the electrolyte.

In some embodiments, the additive includes a silicon-containing additive and a sulfur-containing additive.

In some embodiments, the silicon-containing additive includes at least one selected from the group consisting of tris(trimethylsilyl)phosphite, tris(trimethylsilyl)phosphate, tris(trimethylsilyl)borate, trimethylfluorosilane, and heptamethyldisilazane.

In some embodiments, a weight percentage of the silicon-containing additive in the electrolyte is 0.1 wt% to 4 wt%.

In some embodiments, the weight percentage of the silicon-containing additive in the electrolyte may be any one selected from the group consisting of 0.1 wt%, 0.5 wt%, 1 wt%, 1.5 wt%, 2 wt%, 2.5 wt%, 3 wt%, 3.5 wt%, and 4 wt%, or a range defined by any two of the aforementioned values.

In some embodiments, the sulfur-containing additive includes at least one selected from the group consisting of 1,3-propanesultone and ethylene sulfate.

In some embodiments, a weight percentage of the sulfur-containing additive in the electrolyte is 0.05 wt% to 3 wt%.

In some embodiments, the weight percentage of the sulfur-containing additive in the electrolyte may be any one selected from the group consisting of 0.05 wt%, 0.1 wt%, 0.5 wt%, 1 wt%, 1.5 wt%, 2 wt%, 2.5 wt%, and 3 wt%, or a range defined by any two of the aforementioned values.

In some embodiments, the sulfur-containing additive includes the 1,3-propanesultone and the ethylene sulfate, and a mass ratio of the 1,3-propanesultone to the ethylene sulfate is in a range of from 7:3 to 5:5.

Through screening, when the sulfur-containing additive includes the two components, i.e., the 1,3-propanesultone and the ethylene sulfate, and the mass ratio of the 1,3-propanesultone to the ethylene sulfate maintains in the above range, the secondary battery exhibits a more superior electrochemical performance.

In some embodiments, the additive further includes at least one selected from the group consisting of vinylene carbonate, vinyl ethylene carbonate, fluoroethylene carbonate, and difluoroethylene carbonate.

In some embodiments, the additive includes lithium difluorophosphate.

In some embodiments, the solvent includes at least one selected from the group consisting of ethylene carbonate, propylene carbonate, butylene carbonate, bis(2,2,2-trifluoroethyl) carbonate, dimethyl carbonate, ethyl methyl carbonate, diethyl carbonate, methyl propyl carbonate, diphenyl carbonate, ethyl acetate, propyl acetate, methyl propionate, ethyl propionate, propyl propionate, methyl butyrate, ethyl butyrate, ethyl 2,2-difluoroacetate, methyl 2,2-difluoroacetate, methyl 2,3,3,3-tetrafluoropropionate, $\gamma$-butyrolactone, acetonitrile, and sulfolane.

In some embodiments, an active material in the negative electrode plate includes at least one selected from the group consisting of graphite, a silicon-based material, and lithium metal.

In some embodiments, an active material in the positive electrode plate includes at least one selected from the group consisting of $LiCoO_2$, $LiFePO_4$, and $Li_aNi_xCo_yMn_{(1-x-y)}O_2$, where $0.9 \leq a \leq 1.1$, $0 < x < 1$, $0 < y < 1$, and $x + y < 1$.

The present disclosure is further illustrated below with specific examples.

**Example 1**

A secondary battery was provided, and its preparation method included the following steps:

S1. Preparation of an electrolyte: At room temperature, in an argon-filled glove box ($H_2O$ < 1 ppm, $O_2$ < 1 ppm), ethylene carbonate (EC) and ethyl methyl carbonate (EMC) were uniformly mixed at a mass ratio of 3:7. Then, water was removed using a 4 Å molecular sieve to obtain a mixed solvent. LiFSI and $LiPF_6$ were sequentially added to the mixed solvent with continuous stirring and cooling, ensuring that a temperature rise of the electrolyte did not exceed 2 °C. A concentration of the LiFSI in the electrolyte was controlled to 0.5 M, and a concentration of the $LiPF_6$ was controlled to 0.7 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%.

S2. Preparation of a positive electrode plate: $Li(Ni_{0.8}Mn_{0.1}Co_{0.1})O_2$ as a positive electrode active material, acetylene black as a conductive agent and polyvinylidene fluoride (PVDF) as a binder were uniformly mixed at a mass ratio of 94:3:3 to obtain a mixture. The mixture was then uniformly dispersed in 1-methyl-2-pyrrolidone (NMP) to form a uniform black slurry. The prepared black slurry was coated onto both sides of an aluminum foil, followed by drying, rolling, and cutting to obtain the positive electrode plate.

S3. Preparation of a negative electrode plate: Graphite as a negative electrode active material, acetylene black (Super P) as a conductive agent, and styrene butadiene rubber (SBR) as a binder were uniformly mixed at a mass ratio of 94:3:3 to obtain a mixture. The mixture was then uniformly dispersed in deionized water to form a uniform black slurry. The prepared slurry was coated onto both sides of a copper foil, followed by drying, rolling, and cutting to obtain the negative electrode plate with a compaction density of 1.55 g/cm$^3$.

S4. Preparation of the secondary battery: The positive electrode plate, a polyethylene separator and the negative electrode plate were stacked sequentially, with the polyethylene separator positioned between the positive electrode plate and the negative electrode plate. After winding, hot-pressing, shaping and tab welding, a bare cell was obtained. The bare cell was placed in an aluminum-plastic film outer packaging and baked in an oven at $85\pm10$ °C for 24 hours. The electrolyte prepared above was injected into a resulting dried battery, followed by standing, formation, and capacity grading to obtain the secondary battery.

**Example 2**

A preparation method of a secondary battery in Example 2 was identical to that in Example 1, except that a solvent used for preparing an electrolyte was different, resulting in a different donor number (DN) of the electrolyte. The electrolyte in Example 2 was prepared as follows. At room temperature, in an argon-filled glove box ($H_2O$ < 1 ppm, $O_2$ < 1 ppm), ethylene carbonate (EC), diethyl carbonate (DEC), and ethyl methyl carbonate (EMC) were uniformly mixed at a mass ratio of 1:2:7. Then, water was removed using a 4Å molecular sieve to obtain a mixed solvent. LiFSI and LiPF$_6$ were sequentially added to the obtained mixed solvent with continuous stirring and cooling, ensuring that a temperature rise of the electrolyte did not exceed 2 °C. A concentration of the LiFSI in the electrolyte was controlled to 0.5 M, and a concentration of the LiPF$_6$ in the electrolyte was controlled to 0.7 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%.

**Example 3**

A preparation method of a secondary battery in Example 3 was identical to that in Example 1, except that a solvent used for preparing an electrolyte was different, resulting in a different donor number (DN) of the electrolyte. The electrolyte in Example 3 was prepared as follows. At room temperature, in an argon-filled glove box ($H_2O$ < 1 ppm, $O_2$ < 1 ppm), ethylene carbonate (EC), ethyl acetate (EA), diethyl carbonate (DEC) and ethyl methyl carbonate (EMC) were uniformly mixed at a mass ratio of 4:1:2:3. Then, water was removed using a 4Å molecular sieve to obtain a mixed solvent. LiFSI and LiPF$_6$ were sequentially added to the obtained mixed solvent with continuous stirring and cooling, ensuring that a temperature rise of the electrolyte did not exceed 2 °C. A concentration of the LiFSI in the electrolyte was controlled to 0.5 M, and a concentration of the LiPF$_6$ in the electrolyte was controlled to 0.7 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%.

**Example 4**

A preparation method of a secondary battery in Example 4 was identical to that in Example 1, except that a lithium salt used for preparing an electrolyte was different. The electrolyte in Example 4 was prepared as follows. At room temperature, in an argon-filled glove box ($H_2O$ < 1 ppm, $O_2$ < 1 ppm), ethylene carbonate (EC) and ethyl methyl carbonate (EMC) were uniformly mixed at a mass ratio of 3:7. Then, water was removed using a 4Å molecular sieve to obtain a mixed solvent. LiFSI and LiPF$_6$ were sequentially added to the obtained mixed solvent with continuous stirring and cooling, ensuring that a temperature rise of the electrolyte did not exceed 2 °C. A concentration of the LiFSI in the electrolyte was controlled to 0.1 M, and a concentration of the LiPF$_6$ in the electrolyte was controlled to 1.1 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%.

### Example 5

A preparation method of a secondary battery in Example 5 was identical to that in Example 1, except that a lithium salt used for preparing an electrolyte were different. The electrolyte in Example 5 was prepared as follows. At room temperature, in an argon-filled glove box ($H_2O$ < 1 ppm, $O_2$ < 1 ppm), ethylene carbonate (EC) and ethyl methyl carbonate (EMC) were uniformly mixed at a mass ratio of 3:7. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 1 M, and a concentration of the $LiPF_6$ in the electrolyte was controlled to 0.2 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%.

### Example 6

A preparation method of a secondary battery in Example 6 was identical to that in Example 1, except that in the preparation step of the negative electrode plate, a compaction density of a resulting negative electrode plate was different.

### Example 7

A preparation method of a secondary battery in Example 7 was identical to that in Example 1, except that in the preparation step of the negative electrode plate, a compaction density of a resulting negative electrode plate in Example 7 was different.

### Example 8

A preparation method of a secondary battery in Example 8 was identical to that in Example 1, except that a solvent used for preparing an electrolyte was different, resulting in a different donor number (DN) of the electrolyte. The electrolyte in Example 8 was prepared as follows. At room temperature, in an argon-filled glove box ($H_2O$ < 1 ppm, $O_2$ < 1 ppm), ethylene carbonate (EC), ethyl acetate (EA), diethyl carbonate (DEC) and ethyl methyl carbonate (EMC) were uniformly mixed at a mass ratio of 4:1:2:3. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 0.5 M, and a concentration of the $LiPF_6$ in the electrolyte was controlled to 0.7 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%. Meanwhile, a compaction density of a resulting negative electrode plate in Example 8 was also varied.

### Example 9

A preparation method of a secondary battery in Example 9 was identical to that in Example 1, except that a solvent used for preparing an electrolyte was different, resulting in a different donor number (DN) of the electrolyte. The electrolyte in Example 9 was prepared as follows. At room temperature, in an argon-filled glove box ($H_2O$ < 1 ppm, $O_2$ < 1 ppm), ethylene carbonate (EC), diethyl carbonate (DEC) and ethyl methyl carbonate (EMC) were uniformly mixed at a mass ratio of 1:2:7. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 0.5 M, and a concentration of the $LiPF_6$ in the electrolyte was controlled to 0.7 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%. Meanwhile, a compaction density of a resulting negative electrode plate in Example 9 was also varied.

**Example 10**

A preparation method of a secondary battery in Example 10 was identical to that in Example 1, except that a lithium salt and a solvent used for preparing an electrolyte were different, resulting in a different donor number (DN) of the electrolyte. The electrolyte in Example 10 was prepared as follows. At room temperature, in an argon-filled glove box ($H_2O$ < 1 ppm, $O_2$ < 1 ppm), ethylene carbonate (EC), ethyl acetate (EA), diethyl carbonate (DEC) and ethyl methyl carbonate (EMC) were uniformly mixed at a mass ratio of 4:1:2:3. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 0.1 M, and a concentration of the $LiPF_6$ in the electrolyte was controlled to 1.1 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%.

**Example 11**

A preparation method of a secondary battery in Example 11 was identical to that in Example 1, except that a lithium salt and a solvent used for preparing an electrolyte were different, resulting in a different donor number (DN) of the electrolyte. The electrolyte in Example 11 was prepared as follows. At room temperature, in an argon-filled glove box ($H_2O$ < 1 ppm, $O_2$ < 1 ppm), ethylene carbonate (EC), diethyl carbonate (DEC) and ethyl methyl carbonate (EMC) were uniformly mixed at a mass ratio of 1:2:7. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 1 M, and a concentration of the $LiPF_6$ in the electrolyte was controlled to 0.2 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%.

**Example 12**

A preparation method of a secondary battery in Example 12 was identical to that in Example 1, except that a lithium salt used for preparing an electrolyte was different. The electrolyte in Example 12 was prepared as follows. At room temperature, in an argon-filled glove box ($H_2O$ < 1 ppm, $O_2$ < 1 ppm), ethylene carbonate (EC) and ethyl methyl carbonate (EMC) were uniformly mixed at a mass ratio of 3:7. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 0.1 M, and a concentration of the $LiPF_6$ in the electrolyte was controlled to 1.1 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%. Meanwhile, a compaction density of a resulting negative electrode plate in Example 12 was also varied.

**Example 13**

A preparation method of a secondary battery in Example 13 was identical to that in Example 1, except that a lithium salt used for preparing an electrolyte was different. The electrolyte in Example 13 was prepared as follows. At room temperature, in an argon-filled glove box ($H_2O$ < 1 ppm, $O_2$ < 1 ppm), ethylene carbonate (EC) and ethyl methyl carbonate (EMC) were uniformly mixed at a mass ratio of 3:7. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 1 M, and a concentration of the $LiPF_6$ in the electrolyte was controlled to 0.2 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%.

Meanwhile, a compaction density of a resulting negative electrode plate in Example 13 was also varied.

**Example 14**

A preparation method of a secondary battery in Example 14 was identical to that in Example 1, except that the ethylene sulfate was replaced with 1,3-propanesultone in an equal amount.

**Example 15**

A preparation method of a secondary battery in Example 15 was identical to that in Example 1, except that a portion of the ethylene sulfate was replaced with 1,3-propanesultone, with a mass ratio of the ethylene sulfate to the 1,3-propanesultone being 7:3.

**Example 16**

A preparation method of a secondary battery in Example 16 was identical to that in Example 1, except that a portion of the ethylene sulfate was replaced with 1,3-propanesultone, with a mass ratio of the ethylene sulfate to the 1,3-propanesultone being 6:4.

**Example 17**

A preparation method of a secondary battery in Example 17 was identical to that in Example 1, except that a portion of the ethylene sulfate was replaced with 1,3-propanesultone, with a mass ratio of the ethylene sulfate to the 1,3-propanesultone being 5:5.

**Example 18**

A preparation method of a secondary battery in Example 18 was identical to that in Example 1, except that a portion of the ethylene sulfate was replaced with 1,3-propanesultone, with a mass ratio of the ethylene sulfate to the 1,3-propanesultone being 2:8.

**Example 19**

A preparation method of a secondary battery in Example 19 was identical to that in Example 1, except that a portion of the ethylene sulfate was replaced with 1,3-propanesultone, with a mass ratio of the ethylene sulfate to the 1,3-propanesultone being 8:2.

**Comparative Example 1**

A preparation method of a secondary battery in Comparative Example 1 was identical to that in Example 1, except that a lithium salt and a solvent used for preparing an electrolyte were different, resulting in a different donor number (DN) of the electrolyte. The electrolyte in Comparative Example 1 was prepared as follows. At room temperature, in an argon-filled glove box ($H_2O$ < 1 ppm, $O_2$ < 1 ppm), ethylene carbonate (EC), ethyl acetate (EA), diethyl carbonate (DEC) and ethyl methyl carbonate (EMC) were uniformly mixed at a mass ratio of 4:1:2:3. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 0.1 M, and a concentration of the $LiPF_6$ in the electrolyte was controlled to 1.1 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%. Meanwhile, a compaction density of a resulting negative electrode plate in Comparative Example 1 was also varied.

**Comparative Example 2**

A preparation method of a secondary battery in Comparative Example 2 was identical to that in Example 1, except that a lithium salt and a solvent used for preparing an electrolyte were different, resulting in a different donor number (DN) of the electrolyte. The electrolyte in Comparative Example 2 was prepared as follows. At room temperature, in an argon-filled glove box ($H_2O$ < 1 ppm, $O_2$ < 1 ppm), ethylene carbonate (EC), diethyl carbonate (DEC) and ethyl methyl carbonate (EMC) were uniformly mixed at a mass ratio of 1:2:7. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 1 M, and a concentration of the $LiPF_6$ in the electrolyte was controlled to 0.2 M, yielding a transparent liquid. Further, vinylene carbonate, lithium difluorophosphate and tris(trimethylsilyl)phosphate were added to obtain the electrolyte, where a weight percentage of the vinylene carbonate in the electrolyte was 1 wt%, a weight percentage of the lithium difluorophosphate in the electrolyte was 0.5 wt%, and a weight percentage of the tris(trimethylsilyl) phosphate in the electrolyte was 1 wt%. Meanwhile, a compaction density of a resulting negative electrode plate in Comparative Example 2 was also varied.

**Comparative Example 3**

A preparation method of a secondary battery in Comparative Example 3 was identical to that in Example 1, except that a solvent used for preparing an electrolyte was different, resulting in a different donor number (DN) of the electrolyte. The electrolyte in Comparative Example 3 was prepared as follows. Ethylene carbonate (EC), ethyl acetate (EA), diethyl carbonate (DEC) and ethyl methyl carbonate (EMC) were uniformly mixed at a mass ratio of 5:1:1:3. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 0.5 M, and a concentration of the $LiPF_6$ in the electrolyte was controlled to 0.7 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%.

**Comparative Example 4**

A preparation method of a secondary battery in Comparative Example 4 was identical to that in Example 1, except that a solvent used for preparing an electrolyte was different, resulting in a different donor number (DN) of the electrolyte. The electrolyte in Comparative Example 4 was prepared as follows. Ethylene carbonate (EC), diethyl carbonate (DEC) and ethyl methyl carbonate (EMC) were uniformly mixed at a mass ratio of 1:3:6. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 0.5 M, and a concentration of the $LiPF_6$ in the electrolyte was controlled to 0.7 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 1 wt%, a weight percentage of the ethylene sulfate in the electrolyte was 1.5 wt%, a weight percentage of the lithium difluorophosphate in the electrolyte was 0.5 wt%, and a weight percentage of the tris(trimethylsilyl) phosphate in the electrolyte was 1 wt%.

**Comparative Example 5**

A preparation method of a secondary battery in Comparative Example 5 was identical to that in Example 1, except that a lithium salt, an additive and a solvent used for preparing an electrolyte were added in different amounts respectively, resulting in a different donor number (DN) of the electrolyte. The electrolyte in Comparative Example 5 was prepared as follows. Ethylene carbonate (EC), diethyl carbonate (DEC) and ethyl methyl carbonate (EMC) were uniformly mixed at a mass ratio of 4:2:4. Then, water was removed using a 4Å molecular sieve to obtain a mixed solvent. LiFSI and $LiPF_6$ were sequentially added to the obtained mixed solvent with continuous stirring and cooling, ensuring that a temperature rise of the electrolyte did not exceed 2 °C. A concentration of the LiFSI in the electrolyte was controlled to 0.05 M, and a concentration of the $LiPF_6$ in the electrolyte was controlled to 1.15 M, yielding a transparent liquid. Further, vinylene carbonate, ethylene sulfate, lithium difluorophosphate and tris(trimethylsilyl)phosphate were added to obtain the electrolyte, where a weight percentage of the vinylene carbonate in the electrolyte was 0.3 wt%, a weight percentage of the ethylene sulfate in the electrolyte was 0.7 wt%, a weight percentage of the lithium difluorophosphate in the electrolyte was 0.2 wt%, and a weight percentage of the tris(trimethylsilyl) phosphate in the electrolyte was 1 wt%.

Parameters of the secondary batteries in the various examples and comparative examples were shown in Table 1, where a concentration of LiFSI in an electrolyte, $C_0$, was measured by GC-MS; a compaction density of a negative electrode plate, PD, was measured using a powder resistivity and compaction density tester, PRCD1100; a donor number of an electrolyte, DN, was measured using NMR, and Y in table 1 represented $\frac{100 \times \sqrt{C_0}}{DN \times PD}$ .

Table 1

|  | $C_0$, M | DN, kcal/mol | PD, g/cm$^3$ | Y |
|---|---|---|---|---|
| Example 1 | 0.5 | 7.5 | 1.55 | 6.08 |
| Example 2 | 0.5 | 5 | 1.55 | 9.12 |
| Example 3 | 0.5 | 10 | 1.55 | 4.56 |
| Example 4 | 0.1 | 7.5 | 1.55 | 2.72 |
| Example 5 | 1 | 7.5 | 1.55 | 8.60 |
| Example 6 | 0.5 | 7.5 | 1.1 | 8.57 |
| Example 7 | 0.5 | 7.5 | 1.8 | 5.24 |
| Example 8 | 0.5 | 10 | 1.8 | 3.93 |
| Example 9 | 0.5 | 5 | 1.1 | 12.86 |
| Example 10 | 0.1 | 10 | 1.55 | 2.04 |
| Example 11 | 1 | 5 | 1.55 | 12.90 |
| Example 12 | 0.1 | 7.5 | 1.8 | 2.34 |
| Example 13 | 1 | 7.5 | 1.1 | 12.12 |
| Example 14 | 0.5 | 7.4 | 1.55 | 6.16 |
| Example 15 | 0.5 | 7.6 | 1.55 | 6.00 |
| Example 16 | 0.5 | 7.7 | 1.55 | 5.92 |
| Example 17 | 0.5 | 7.7 | *1.55* | 5.92 |
| Example 18 | 0.5 | 7.4 | 1.55 | 6.16 |
| Example 19 | 0.5 | 7.3 | 1.55 | 6.25 |
| Comparative Example 1 | 0.1 | 10 | 1.8 | 1.76 |
| Comparative Example 2 | 1 | 4 | 0.9 | 27.78 |
| Comparative Example 3 | 0.5 | 30 | 1.55 | 1.52 |
| Comparative Example 4 | 0.5 | 3 | 1.55 | 15.21 |
| Comparative Example 5 | 0.05 | 9 | 1.55 | 1.63 |

The performance of the secondary batteries prepared in the above examples and comparative examples was tested. Specific test methods were as follows.

(1) Room-temperature direct current resistance (DCR) test: At 25±2 °C, the secondary batteries obtained from the various examples and comparative examples were each charged to 4.4V at 1C, and then discharged at 1C for 30 minutes to reach a 50% state of charge (SOC). Subsequently, the secondary batteries were each subjected to a 10C constant-current pulse discharge for 10 seconds. Further, the secondary batteries were each adjusted to 50% SOC using the aforementioned method, followed by a 10C constant-current pulse charge for 10s. A direct current resistance (DCR) was calculated as follows: DCR = (Voltage before pulse discharge - Voltage after pulse discharge) / Discharge current. After the secondary batteries were charged and discharged for 500 cycles, the DCR was tested again. A DCR change rate (%) was calculated as follows: DCR change rate (%) = [(DCR after 500 cycles - Initial DCR) / Initial DCR] ×100%.

(2) Room-temperature cycle performance test: At 25±2 °C, the secondary batteries obtained from the various examples and comparative examples were each subjected to a charge-discharge cycle test within a voltage range of 2.8-4.4V at a charge/discharge rate of 1C/1C. A first-cycle discharge specific capacity and a 500th-cycle discharge specific capacity were recorded, respectively. A capacity retention rate after 500 cycles (%) was calculated as follows: Capacity retention rate after 500 cycles (%) = (500th-cycle discharge specific capacity/ First-cycle discharge specific capacity) × 100%.

(3) Lithium plating at the interface: At 25±2 °C, a secondary battery obtained from each of the various examples and comparative examples was fully charged and then disassembled. Specifically, the secondary battery was first rested for 30 minutes. Then, two tabs of the secondary battery were covered with an adhesive tape to avoid metal-contact short circuits. After removing an insulating film of the secondary battery, the two tabs were cut off with a scissor to avoid short circuits during subsequent steps. The adhesive tape on the top and bottom sides of the separator was peeled off, and the electrodes were carefully unrolled to avoid contact between the positive electrode plate and the negative electrode plate. Finally, the unrolled electrode plates were separated for observation of lithium plating on a surface of the negative electrode plate. When a coverage of a lithium-plated region on the surface of the negative electrode plate was less than 5%, the secondary battery was considered as minor lithium plating; when the coverage of the lithium-plated region on the surface of the negative electrode plate was in a range of from 5% to 40%, the secondary battery was considered as moderate lithium plating; when the coverage of the lithium-plated region on the surface of the negative electrode plate was more than 40%, the secondary battery was considered as severe lithium plating. The test results were shown in Table 2.

Table 2

|  | Capacity retention rate after 500 cycles, % | DCR change rate, % | Presence/absence of lithium plating at the interface |
|---|---|---|---|
| Example 1 | 95.1 | 18.7 | No lithium plating |
| Example 2 | 90.2 | 23.4 | No lithium plating |
| Example 3 | 91.4 | 22.5 | No lithium plating |
| Example 4 | 92.3 | 20.8 | No lithium plating |
| Example 5 | 90.4 | 23.0 | No lithium plating |
| Example 6 | 91.3 | 20.2 | No lithium plating |
| Example 7 | 88.4 | 24.5 | Minor lithium plating |
| Example 8 | 87.6 | 24.9 | Minor lithium plating |
| Example 9 | 90.4 | 21.2 | No lithium plating |
| Example 10 | 88.6 | 22.8 | No lithium plating |
| Example 11 | 90.2 | 22.8 | No lithium plating |
| Example 12 | 87.2 | 25.2 | Minor lithium plating |
| Example 13 | 88.8 | 23.2 | No lithium plating |
| Example 14 | 94.9 | 18.9 | No lithium plating |
| Example 15 | 95.4 | 18.5 | No lithium plating |
| Example 16 | 95.5 | 18.4 | No lithium plating |
| Example 17 | 95.8 | 18.2 | No lithium plating |
| Example 18 | 95.0 | 18.6 | No lithium plating |
| Example 19 | 95.2 | 18.4 | No lithium plating |
| Comparative Example 1 | 78.3 | 31.8 | Lithium plating |
| Comparative Example 2 | 83.6 | 24.8 | Minor lithium plating |
| Comparative Example 3 | 84.6 | 25.2 | Lithium plating |
| Comparative Example 4 | 85.3 | 22.3 | Lithium plating |
| Comparative Example 5 | 82.3 | 24.2 | Lithium plating |

As shown in Table 2, the secondary batteries prepared in the various examples exhibited ideal electrochemical performance. Under 1C fast-charging and fast-discharging conditions, each of the secondary batteries still maintained a capacity retention rate of over 87% after 500 cycles, with a DCR change rate not exceeding 26%, and no obvious lithium plating phenomenon was observed at the negative electrode interface. Furthermore, as indicated by the comparison between Example 1 and Examples 15-19, when the sulfur-containing additive in the electrolyte was a combination of ethylene sulfate and 1,3-propanesultone at a mass ratio ranging from 7:3 to 5:5, the secondary battery exhibited superior electrochemical performance, without substantial change in the DN value of the electrolyte. As indicated by the comparison between Example 1 and Examples 4-5, when a concentration of the LiFSI in the electrolyte was changed, the cycle performance, impedance performance, and interfacial stability of a secondary battery were all changed simultaneously. If the concentration of the LiFSI in the electrolyte was too high, the corrosion of an aluminum current collector would occur, thereby leading to a decrease in the electrochemical performance of the secondary battery. As can be seen from the various examples and comparative examples, in addition to the electrolyte, the negative electrode plate in contact with the electrolyte was also required to maintain an appropriate compaction density, and the Y value should be controlled within the range of 2.0 to 12.9, so as to ensure an ideal energy density and a desirable lithium intercalation/de-intercalation efficiency. If the Y value was too high, it was indicated that the secondary battery had high impedance, or that the compaction density of the negative electrode plate in the secondary battery was too low. These conditions would easily lead to poor electrochemical cycle stability or low energy density, and would result in lithium plating. However, if the Y value was too low, it was indicated that the solvation energy of the electrolyte would be too high, resulting in increased impedance of the secondary battery, or the compaction density was too high, resulting in poor electrolyte wetting. These conditions could similarly cause degradation in the overall performance of the secondary battery. On the other hand, as can be seen from these examples and comparative examples, an increase or decrease in the DN value of an electrolyte did not imply a performance degradation of a secondary battery; under these conditions, if the electrolyte was matched with a negative electrode plate with an appropriate compaction density, an expected effect would still be achieved. However, when the composition of an electrolyte in a secondary battery remained identical, if the compaction density of the matched negative electrode plate in the secondary battery resulted in a Y value falling outside the specified range, the performance of the secondary battery would still fail to meet the required standard.

**Claims**

1. A secondary battery, comprising a positive electrode plate, a negative electrode plate, a separator, and an electrolyte, wherein the electrolyte comprises a lithium salt and a solvent, the lithium salt comprises lithium bis(fluorosulfonyl) imide (LiFSI), and the secondary battery satisfies a relationship as follows:

$$2.0 \leq \frac{100 \times \sqrt{C_0}}{DN \times PD} \leq 12.9,$$

   wherein $C_0$, in mol/L (M), represents a concentration of the LiFSI in the electrolyte;
   DN, in kcal/mol, represents a donor number of the electrolyte; and
   PD, in g/cm$^3$, represents a compaction density of the negative electrode plate.

2. The secondary battery according to claim 1, wherein the secondary battery satisfies at least one selected from the group consisting of (1)-(3):

   (1) the $C_0$, in mol/L (M), satisfies a relationship of 0 M < $C_0$ (M) < 2 M;
   (2) the DN, in kcal/mol, satisfies a relationship of 0 kcal/mol < DN (kcal/mol) < 15 kcal/mol; and
   (3) the PD, in g/cm$^3$, satisfies a relationship of 1 g/cm$^3$ < PD (g/cm$^3$) < 2 g/cm$^3$.

3. The secondary battery according to claim 1, wherein the secondary battery satisfies at least one selected from the group consisting of (a)-(c):

   (a) the $C_0$, in M, satisfies a relationship of 0.1 M ≤ $C_0$ (M) ≤ 1 M;
   (b) the DN, in kcal/mol, satisfies a relationship of 5 kcal/mol ≤ DN (kcal/mol) ≤ 10 kcal/mol; and
   (c) the PD, in g/cm$^3$, satisfies a relationship of 1.1 g/cm$^3$ ≤ PD (g/cm$^3$) ≤ 1.8 g/cm$^3$.

4. The secondary battery according to any one of claims 1-3, wherein the lithium salt further comprises at least one selected from the group consisting of lithium hexafluorophosphate, lithium tetrafluoroborate, lithium bis(oxalato) borate, lithium difluoro(oxalato)borate, lithium difluoro(bisoxalato)phosphate, and lithium bis(trifluoromethanesulfonyl)imide.

5. The secondary battery according to claim 1, wherein the electrolyte further comprises an additive, and the additive comprises a silicon-containing additive and/or a sulfur-containing additive.

6. The secondary battery according to claim 5, wherein the silicon-containing additive comprises at least one selected from the group consisting of tris(trimethylsilyl)phosphite, tris(trimethylsilyl)phosphate, tris(trimethylsilyl)borate, trimethylfluorosilane, and heptamethyldisilazane; and/or
the sulfur-containing additive comprises at least one selected from the group consisting of 1,3-propanesultone and ethylene sulfate.

7. The secondary battery according to claim 5, wherein the additive further comprises at least one selected from the group consisting of vinylene carbonate, vinyl ethylene carbonate, fluoroethylene carbonate, and difluoroethylene carbonate.

8. The secondary battery according to claim 6, wherein the sulfur-containing additive comprises the 1,3-propanesultone and the ethylene sulfate, and a mass ratio of the 1,3-propanesultone to the ethylene sulfate is in a range of from 7:3 to 5:5.

9. The secondary battery according to any one of claims 1-3, wherein the solvent comprises at least one selected from the group consisting of ethylene carbonate, propylene carbonate, butylene carbonate, bis(2,2,2-trifluoroethyl) carbonate, dimethyl carbonate, ethyl methyl carbonate, diethyl carbonate, methyl propyl carbonate, diphenyl carbonate, ethyl acetate, propyl acetate, methyl propionate, ethyl propionate, propyl propionate, methyl butyrate, ethyl butyrate, ethyl 2,2-difluoroacetate, methyl 2,2-difluoroacetate, methyl 2,3,3,3-tetrafluoropropionate, $\gamma$-butyr-olactone, acetonitrile, and sulfolane.

10. The secondary battery according to any one of claims 5-8, wherein the additive comprises lithium difluorophosphate.

11. The secondary battery according to any one of claims 5-8, wherein a weight percentage of the additive in the electrolyte is 0.5 wt% to 10 wt%.

12. The secondary battery according to any one of claims 1-3, wherein an active material in the negative electrode plate comprises at least one selected from the group consisting of graphite, a silicon-based material, and lithium metal.

13. The secondary battery according to any one of claims 1-3, wherein an active material in the positive electrode plate comprises at least one selected from the group consisting of $LiCoO_2$, $LiFePO_4$, and $Li_aNi_xCo_yMn_{(1-x-y)}O_2$, where $0.9 \leq a \leq 1.1$, $0 < x < 1$, $0 < y < 1$, and $x + y < 1$.

14. An electrical device, comprising the secondary battery according to any one of claims 1-13, wherein the secondary battery serves as a power supply for the electrical device.

## INTERNATIONAL SEARCH REPORT

| International application No. |
| --- |
| **PCT/CN2024/073994** |

| A. | CLASSIFICATION OF SUBJECT MATTER |
| --- | --- |

H01M10/0566(2010.01)i; H01M10/0568(2010.01)i; H01M10/0567(2010.01)i; H01M10/0569(2010.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电解液, 双氟磺酰亚胺, 供体数, 负极, 阳极, 密度, cell, battery, LiFSI, donor number, negative, anode, density

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| X | CN 110235296 A (HITACHI LTD.) 13 September 2019 (2019-09-13) description, paragraphs 6-176, and figures 1-4 | | 1-3, 9, 12, 14 |
| Y | CN 110235296 A (HITACHI LTD.) 13 September 2019 (2019-09-13) description, paragraphs 6-176, and figures 1-4 | | 4-14 |
| Y | CN 116387628 A (SUNWODA ELECTRIC VEHICLE BATTERY CO., LTD.) 04 July 2023 (2023-07-04) description, paragraphs 5-166 | | 4-14 |
| X | CN 116914264 A (QUANZHOU BOTAI SEMICONDUCTOR TECHNOLOGY CO., LTD.) 20 October 2023 (2023-10-20) description, paragraphs 7-95 | | 1-14 |
| A | CN 115692856 A (WESTLAKE UNIVERSITY) 03 February 2023 (2023-02-03) entire document | | 1-14 |
| A | CN 111212887 A (BATTELLE MEMORIAL INSTITUTE) 29 May 2020 (2020-05-29) entire document | | 1-14 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 June 2024** | **01 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/073994** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2020179126 A1 (HITACHI, LTD. et al.) 10 September 2020 (2020-09-10) entire document | 1-14 |

Form PCT/ISA/210 (second sheet) (July 2022)

## INTERNATIONAL SEARCH REPORT
### Information on patent family members

International application No.

**PCT/CN2024/073994**

| Patent document cited in search report | | | Publication date (day/month/year) | Patent family member(s) | | | Publication date (day/month/year) |
|---|---|---|---|---|---|---|---|
| CN | 110235296 | A | 13 September 2019 | WO | 2018179990 | A1 | 04 October 2018 |
| | | | | US | 2020014067 | A1 | 09 January 2020 |
| | | | | KR | 20190088070 | A | 25 July 2019 |
| | | | | JPWO | 2018179990 | A1 | 07 November 2019 |
| | | | | JP | 6843966 | B2 | 17 March 2021 |
| CN | 116387628 | A | 04 July 2023 | None | | | |
| CN | 116914264 | A | 20 October 2023 | None | | | |
| CN | 115692856 | A | 03 February 2023 | None | | | |
| CN | 111212887 | A | 29 May 2020 | EP | 3697869 | A1 | 26 August 2020 |
| | | | | EP | 3697869 | A4 | 04 August 2021 |
| | | | | JP | 2021500704 | A | 07 January 2021 |
| | | | | KR | 20200059316 | A | 28 May 2020 |
| | | | | WO | 2019078965 | A1 | 25 April 2019 |
| | | | | WO | 2019078965 | A9 | 19 December 2019 |
| WO | 2020179126 | A1 | 10 September 2020 | JP | 2020145054 | A | 10 September 2020 |
| | | | | JP | 7270210 | B2 | 10 May 2023 |
| | | | | KR | 20210087515 | A | 12 July 2021 |
| | | | | KR | 102610616 | B1 | 07 December 2023 |

Form PCT/ISA/210 (patent family annex) (July 2022)